# EUROPEAN PATENT SPECIFICATION

(11) **EP 1 136 464 B1**
(45) Date of publication and mention of the grant of the patent: **06.10.2010**
(21) Application number: 01106592.7
(22) Date of filing: 15.03.2001
(51) Int. Cl.: C05F 9/04, C05F 17/02

(54) **Composting bag**
Kompostierungsbeutel
Sac à compostage

(30) Priority: 23.03.2000 JP 2000082574; 05.09.2000 JP 2000268298
(43) Date of publication of application: 26.09.2001
(73) Proprietor: Tanaka Sangyo Co., Ltd., Toyonaka-shi, Osaka 561-0817 (JP)
(72) Inventor: Taniguchi, Mitsunori, Toyonaka, Osaka (JP)
(74) Representative: Hering, Hartmut

(56) References cited:
- AT-B- 390 053
- DE-A- 3 019 253
- US-A- 4 184 602
- US-A- 5 894 780
- US-B1- 39 349 999
- PATENT ABSTRACTS OF JAPAN vol. 1998, no. 08, 30 June 1998 (1998-06-30) & JP 10 067589 A (TAISEI CORP), 10 March 1998 (1998-03-10)

## Description

The present invention relates to compositing bags for composting farming and livestock farming waste, such as leaves and hogweeds, and in particular, to a composting bag which is left outdoors for accelerating composting of the waste.

Leaves and hogweeds as farming and livestock farming waste are decomposed through natural decomposing process and are then used as a fertilizer. A composting bag for producing such a fertilizer is formed of a tubular bag body and an openable lid. The bag body and the lid are fabricated of an air-permeable mesh. Since the farming and livestock farming waste is decomposed by microbes living in the natural environments, it is necessary to keep the bag permeable to accelerate fermentation.

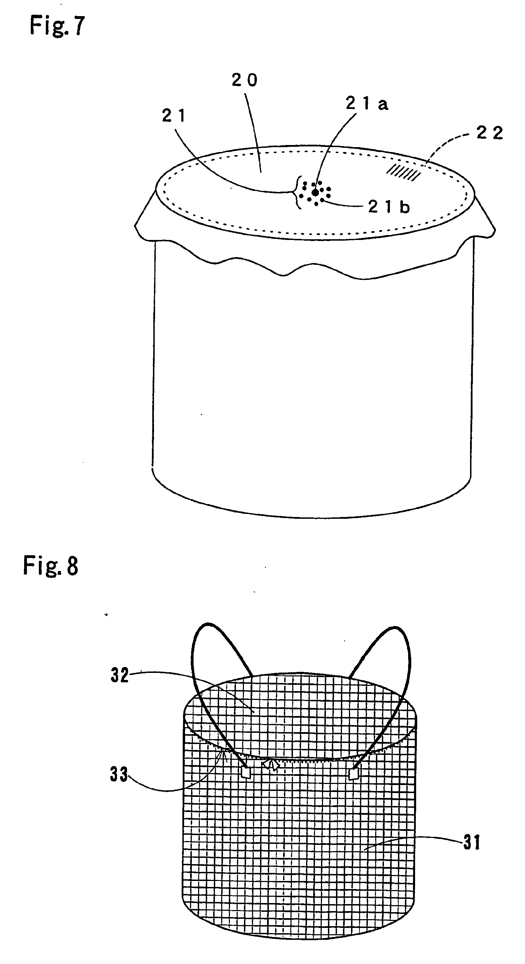

FIG. 8 shows one example of a conventional composting bag. The composting bag is formed of a bag body 31, a bag top lid 32, and a zipper 33 for opening and closing the bag top lid 32. After introducing the waste in the bag, the bag is left outdoors for one to several months for the waste to be decomposed, and then the composted waste is then taken out for use.

To allow the waste to properly decompose, an adequate amount of water is required in addition to the supply of air. In a dry state, simply applying water from above the composting bag works. However, when it frequently rains such as in rainy seasons, the waste is not properly decomposed. To help decompose the waste, the composting bag may be transferred into indoor areas or may be covered with a water-resistant sheet. The waste loaded composting bag is typically heavy and difficult to transfer. Further, covering the composting bag with a water-resistant sheet during rain is not an easy job.

PATENT ABSTRACTS OF JAPAN vol. 1998, no. 08, 30 JUNE 1998 (1998-06-30) & JP 10 067589 disclose a method for forming a compost from a lumbered wood, wherein the used composting means comprises a blocking material such as a vinyl sheet.

US-A-4 184 602 discloses a collapsible expansible container useful for compost tanks and relates mainly to the construction of panels used for building up a container. Further, the use of tarpaulin as material is mentioned.

US-A-5 894 780 discloses a composting container including a barrel and top and bottom lids, wherein the circumference of a lower half of the barrel of the container is tightened by bands.

US 3 934 999 B1 discloses composting organic materials being filled in a bag having a plurality of perforations through its body portion using an aqueous solution formed by adding a composting tablet containing enzymes and a nitrogen releasing substance to a predetermined amount of water.

AT 390 053 B discloses composting means used in greenhouses.

The closest prior art document DE 30 19 253 A discloses composting means having a cylindrical outer coating made of a continuous material without interruptions and a cylindrical inner coating made of a grid. Further, the composting means comprises a top lid made of a coating film, the diameter of which is larger than the diameter of the cylindrical outer coating as seen from above. Especially, there is provided a hose and its fitting in the center of the top lid for selectively guiding water into the composting means. Further, there are provided through holes at the edge of the film used for fixing brackets. The hose connected to the fitting is used for guiding water into the composting means or, in case of too much rain, to the outside of the composting means. Especially, the hose and the hole or the fitting are used as drain pipe and as drain hole for water overflow on the film.

It is the object of the present invention to provide a composting bag that permits a moisture adjustment without introducing rain drops into a waste in the bag while keeping air permeability in the bag.

This object is solved by a composting bag according to independent claim 1. The dependent claims 2 to 6 show advantageous further developments of the composting bag of claim 1.

Especially, a composting bag of the present invention includes a tubular bag body fabricated of an air-permeable material, a top lid fabricated of an air-permeable material and openably attached to the bag body, and a screening sheet for covering the top lid, wherein the screening sheet is fabricated of a water-impermeable material and has a plurality of through holes drilled in the direction of thickness. In this arrangement, the through holes function as a passage for an adequate supply of water into the bag while allowing inner moisture to evaporate through the holes to discharge extra moisture.

The screening sheet includes a large hole in the center thereof and a plurality of small holes around the large hole. Water is supplied through the central large hole while moisture is released through the plurality of small holes. Preferably, the screening sheet comprises the plurality of holes arranged in radial lines and on concentric circles.

### BRIEF DESCRIPTION OF THE DRAWINGS

FIG. 1 illustrates a composting bag being not according to the present invention.
FIGS. 2A and 2B illustrate the composting bag during a rainy weather and during a fine weather.
FIG. 3 partially illustrates a composting bag being not according to the present invention.
FIG. 4 illustrates a composting bag being not according to the present invention.
FIG. 5 illustrates a composting bag being not according to the present invention.
FIG. 6 illustrates a composting bag being not according to the present invention.
FIG. 7 illustrates an embodiment of the composting bag of the present invention.
FIG. 8 is a perspective view of a conventional composting bag.

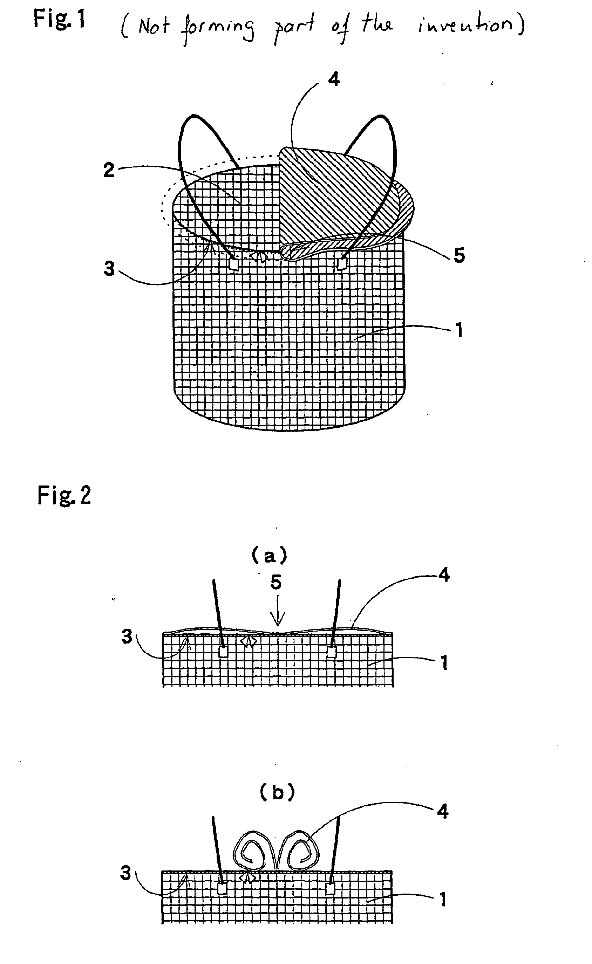

The embodiment of the present invention is now discussed, referring to the drawings. FIG. 1 shows a composting bag including a tubular bag body 1 fabricated of an air-permeable material, a top lid 2 fabricated of an air-permeable material and openably attached to the tubular bag body 1, a zipper 3 for opening and closing the top lid 2 with respect to the tubular bag body 1, a water-resistant sheet 4 for covering the top lid 2, and a junction portion 5 of the water-resistant sheet 4 connected to the top lid 2 only in a line passing through the center of the top lid 2. The water-resistant sheet is connected to the top lid 2 only in a line passing through the center of the top lid 2. On a rainy day, the water-resistant sheet 4 is spread over the top lid 2 to prevent rain drops from falling on the top lid 2. On a fine weather day, the water-resistant sheet 4 is folded back from the junction line to keep air passages open. The water-resistant sheet 4 is connected to the top lid 2 along only the line running through the center of the top lid 2. Operations for folding back or spreading the water-resistant sheet 4 are easy. Further, the water-resistant sheet 4 is not blown off from the bag.

FIGS. 2A and 2B are front views of the bag shown in FIG. 1. FIG. 2A shows the setting of the composting bag on a rainy day, and FIG. 2B shows the setting of the composting bag on a fine day. As shown in FIG. 2A, the water-resistant sheet 4 is spread over the top lid 2 on a rainy day. Repelled by the water-resistant sheet 4, rain drops do not enter into the bag. The moisture level of the compost in the bag is kept to a constant, rather than being excessively raised. Referring to FIG. 2B, the water-resistant sheet 4 is wound into a scroll from the junction line so that the composting bag may take in sufficient air through the holes of the top lid 2 on a fine day. When the compost in the bag lacks moisture, the water-resistant sheet 4 may be wound in a scroll to expose the top lid 2 to let in required amount of rain drops even on a rainy day. The water-resistant sheet 4 may be spread over the top lid 2 on a fine day to prevent moisture from being evaporated and the compost from being dried.

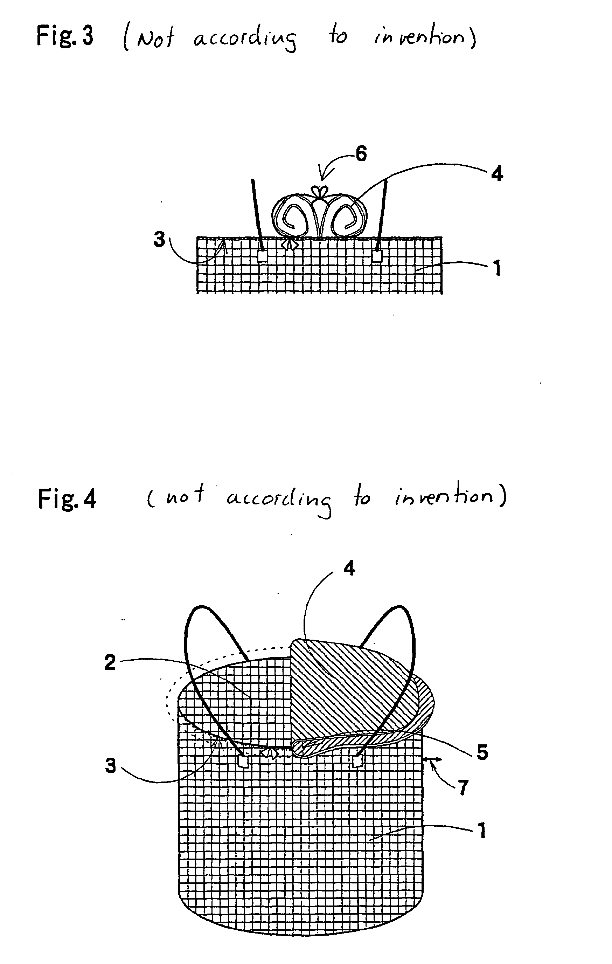

A method of folding the water-resistant sheet 4 includes any method of folding the water-resistant sheet 4 into a compact bundle. For example, the water-resistant sheet 4 may be wound into a scroll toward the junction line from its end, or is folded into a compact bundle so that the surface of the top lid 2 is widely exposed to keep the holes open for air intake. As shown in FIG. 1, the holes on the top lid 2 are opened by folding half the water-resistant sheet 4 over the other half. These methods are the ones in which the present invention is used. FIG. 3 shows one method for keeping the folded water-resistant sheet 4 in its folded state. The water-resistant sheet 4 is fabricated of a material that might immediately spread back after being folded if not tied to the junction line with a wire 6. The wire 6 is attached in a direction perpendicular to the junction line between the top lid 2 and the water-resistant sheet 4. After winding the water-resistant sheet 4 toward the junction line, the wire 6 ties the bundle in perpendicular to the bundle. The water-resistant sheet 4 may be attached to the top lid 2 through sewing or welding. Any method may be employed as long as it connects the water-resistant sheet 4 to the top lid 2 along a line. Throughout the figures, like components are identified with like reference numerals.

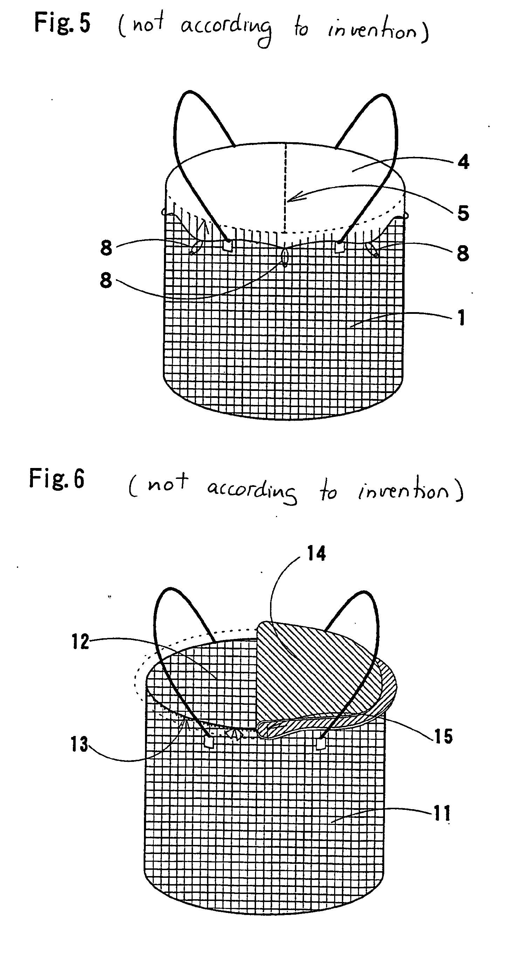

FIG. 4 illustrates a composting bag including eaves 7 that is an overhang portion of the water-resistant sheet 4. The water-resistant sheet 4 is larger than the top lid 2, and the overhang portion thereof serves at the eaves 7. With the eaves 7 employed, the bag is protected from rain drops even when it heavily rains or when rain drops obliquely fall. FIG. 5 shows a composting bag which has a means for securing the spread water-resistant sheet 4 to the tubular bag body 1 against a strong wind. Hooks 8 are arranged on the edge of the water-resistant sheet 4 and the top edge of the tubular bag body 1. With the hooks 8 connected, the water-resistant sheet 4 in its spread state remains secured to the tubular bag body 1 even when a strong wind blows.

The water-resistant sheet may be of any type as long as it is water-resistant. It is important that the water-resistant sheet 4 be folded or wound. Specifically, the water-resistant sheet 4 may be a tarpaulin, a polyethylene film, or a vinyl sheet.

In each of the above composting bags, a discharge port may be arranged to take the compost out from the lower portion of the bag. The discharge port is not limited to a particular structure. The discharge port may be any of known techniques. For example, the discharge port may be openable with a zipper, for example, or formed of a petal-shaped bottom lid.

FIG. 6 shows a further composting bag. The construction shown in FIG. 6 is not largely different from that shown in FIG. 1. The composting bag shown in FIG. 6 includes a tubular bag body 11 fabricated of an air-permeable material, a top lid 12 fabricated of an air-permeable material and openably attached to the tubular bag body 11, a zipper 13 for opening and closing the top lid 12 with respect to the tubular bag body 11, a screening sheet 14 for covering the top lid 12, and a diameter line 15 of the screening sheet 14 connected to or sewn to the top lid 12. The screening sheet 14 is fabricated of a synthetic resin fabric of fine mesh. The screening sheet 14 may be fabricated of a material which blocks rain drops because of the size thereof larger than the size of the mesh while permitting water vapors to pass therethrough because of the size thereof sufficiently smaller than the size of the mesh. Specifically, Gore-Tex (Trade Mark) is preferable. With this arrangement, the screening sheet 14 is folded to the diameter line 15 on a fine day to expose the top lid , 12. Excess moisture is thus released into the atmosphere through the top lid 12. On a rainy day, the screening sheet 14 is spread over. When rain drops directly fall on the screening sheet 14, they are not allowed to pass therethrough. No excess water is introduced into the bag. Even when a user forgets folding the screening sheet 14 after the rain stops, water in the tubular bag body 11 may vaporize and water vapors are allowed to be released into the atmosphere through the screening sheet 14. With neither excessively high humidity nor excess water, decomposition is properly accomplished.

The screening sheet 14 with the eaves thereof may be set to be larger than the top lid 12 as in the composting bag shown in FIG. 2. The top opening of the tubular bag body 11 is sufficiently screened from heavy rain or obliquely falling rain drops. As in the composting bag shown in FIG. 3, a plurality of hooks 7 may be attached to the edge of the screening sheet 14. The hooks 7 may be hung on the mesh of the tubular bag body 11 to prevent the screening sheet 14 from being folded under strong wind conditions.

In the composting bag shown in FIG. 6, the screening sheet 14 covers the top lid 12. The top lid 12 itself may be fabricated of a material, such as Gore-Tex, which is impermeable to water drops but permeable to water vapors. In such a case, there is no need for sewing the screening sheet 14 to the top lid 12, and the top lid 12 is opened and closed with respect to the tubular bag body 11 using the zipper 13.

FIG. 7 shows a screening sheet in an embodiment of the present invention. The components except for the screening sheet remain unchanged from those shown in FIG. 6. As shown, a screening sheet 20 is fabricated of a water-resistant cloth such as a tarpaulin or a synthetic resin sheet. The screening sheet 20 has a number holes 21 in the direction of thickness. The holes 21 include a large hole 21a and small holes 21b. In the embodiment, the large hole 21a is centered on the screening sheet 20. The 32 small holes 21b are drilled in eight radial lines and in three concentric circles. The size of the large hole 21a has a diameter of about 10 mm and the small hole 21b has a diameter of about 5 mm on the bag having a diameter of about 1100 mm. The screening sheet 20 sewn to the top lid has a number of holes. On a fine day, water vapors are released into the atmosphere through the holes 21 for humidity adjustment. On a rainy day, the screening sheet 20 prevents excess rain water from entering the bag. An adequate amount of water is introduced into the bag through the large hole 21a for moisture adjustment. Rain water spreads over the screening sheet 20, but because of surface tension, rain water will not enter the bag through the small holes 21b. In other words, the proper supply and vaporization of water are performed through the holes 21.

FIG. 7 shows one example of the holes 21. The size, the number and layout of the holes are subject to change. Since the screening sheet 20 itself allows moisture to be supplied or vaporized, the closing and opening of the screening sheet 20 are not required. The screening sheet 20 is thus sewn to the top lid around a sewing line 22 as shown. The top lid may be dispensed with and the screening sheet 20 may be used as a top lid as well.

In the embodiment, the diameter of the screening sheet 20 may be set to be larger than that of the top lid to form eaves. The eaves thus provides the same advantage as that of the composting bag of FIG.1.

As discussed above, the water-resistant sheet is arranged on top of the top lid. Excess water is thus prevented from entering the bag during a heavy rain fall.

Since the water-resistant sheet is connected to the top lid along a single line only, the water-resistant sheet can be folded to the junction line. On a fine day, the water-resistant sheet is folded to expose the top lid to the atmosphere, thereby assuring sufficient air permeability.

In the embodiment, the large and small holes are drilled in the screening sheet. Water is thus supplied through the large hole on a rainy day. Through the small holes, excess moisture is released as vapors into the atmosphere. With the simple construction, an appropriate humidity is maintained.

## Claims

1. A composting bag comprising a tubular bag body (11) fabricated of an air-permeable material, a top lid (12) fabricated of an air-permeable material and openably attached to the bag body (11), and a screening sheet (20) covering the top lid (12) or being used as the top lid (12), wherein the screening sheet (20) is fabricated of a water-resistant cloth and has a plurality of through holes (21) drilled in the direction of thickness, **characterized in that** the holes (21) are adapted to release water vapors into the atmosphere for humidity adjustment and comprise a large hole (21 a) being centered on the screening sheet (20) and being adapted to introduce an adequate amount of water into the bag for moisture adjustment and a plurality of small holes (21b), which do not allow rain water to enter the bag, around the large hole (21a).

2. The composting bag according to claim 1, wherein the water-resistant cloth is a tarpaulin or a synthetic resin sheet.

3. The composting bag according to any of the preceding claims, wherein the small holes (21 b) are drilled in radial lines and in concentric circles.

4. The composting bag according to any of the preceding claims, wherein the screening sheet (20) covering the top lid (12) is sewn to the top lid (12) around a sewing line (22).

5. The composting bag according to any of the preceding claims, wherein the screening sheet (20) is larger in diameter than the top lid (2) and an overhang portion of the screening sheet (20) serves as eaves (7).

6. The composting bag according to any of the preceding claims, comprising a zipper (13) adapted to open and close the top lid (12) with respect to the tubular body (11).

## Patentansprüche

1. Kompostierungsbeutel mit einem rohrförmigen Beutelkörper (11), der aus luftdurchlässigem Material hergestellt ist, einem obersten Deckel (12), der aus luftdurchlässigem Material hergestellt ist und öffnungsbar an dem Beutelkörper (11) angebracht ist, und einer Abschirmung (20), die den obersten Deckel (12) bedeckt oder als der oberste Deckel (12) verwendet wird, wobei die Abschirmung (20) aus wasserfestem Gewebe hergestellt ist und eine Vielzahl von Durchgangslöchern (21) hat, die in der Dickenrichtung gebohrt sind, **dadurch gekennzeichnet, dass** die Löcher (21) dazu geeignet sind, zur Feuchtigkeitseinstellung Wasserdämpfe in die Atmosphäre freizugeben, und ein großes Loch (21 a) aufweisen, das auf der Abschirmung (20) zentriert ist und dazu geeignet ist, zur Wassergehaltseinstellung eine adäquate Menge an Wasser in den Beutel einzuführen, und eine Vielzahl von kleinen Löchern (21 b), die nicht zulassen, dass Regenwasser in den Beutel eintritt, um das große Loch (21 a).

2. Kompostierungsbeutel nach Anspruch 1, wobei das wasserfeste Gewebe eine Abdeckplane oder ein Kunstharzbogen ist.

3. Kompostierungsbeutel nach einem der vorangehenden Ansprüche, wobei die kleinen Löcher (21 b) in radialen Linien und in konzentrischen Kreisen gebohrt sind.

4. Kompostierungsbeutel nach einem der vorangehenden Ansprüche, wobei die Abschirmung (20), die den obersten Deckel (12) bedeckt, um eine Nähkante (22) an den obersten Deckel (12) genäht ist.

5. Kompostierungsbeutel nach einem der vorangehenden Ansprüche, wobei die Abschirmung (20) in Bezug auf den Durchmesser größer als der oberste Deckel (12) ist und ein überhängender Teilbereich der Abschirmung (20) als Regenleiste (7) dient.

6. Kompostierungsbeutel nach einem der vorangehenden Ansprüche, der einen Reißverschluss (13) aufweist, der dazu geeignet ist, den obersten Deckel (12) in Bezug auf den rohrförmigen Körper (11) zu öffnen und zu schließen.

## Revendications

1. Sac de compostage comprenant un corps de sac (11) tubulaire réalisé dans un matériau perméable à l'air, un couvercle supérieur (12) réalisé dans un matériau perméable à l'air et attaché de façon ouvrable au corps de sac (11), et une feuille de tamisage (20) couvrant le couvercle supérieur (12) ou étant utilisée en tant que couvercle supérieur (12), dans lequel la feuille de tamisage (20) est réalisée dans un tissu résistant à l'eau et a une pluralité de trous (21) débouchants percés dans la direction de l'épaisseur, **caractérisé en ce que** les trous (21) sont adaptés pour relâcher des vapeurs d'eau dans l'atmosphère pour l'ajustement de l'humidité et comprennent un grand trou (21a) qui est centré sur la feuille de tamisage (20) et qui est adapté pour introduire une quantité adéquate d'eau dans le sac pour l'ajustement de la teneur en eau et une pluralité de petits trous (21 b), qui ne permettent pas à l'eau de pluie d'entrer dans le sac, autour du grand trou (21 a).

2. Sac de compostage selon la revendication 1, dans lequel le tissu résistant à l'eau est une feuille en toile à bâche ou en résine synthétique.

3. Sac de compostage selon l'une quelconque des revendications précédentes, dans lequel les petits trous (21 b) sont percés en lignes radiales et en cercles concentriques.

4. Sac de compostage selon l'une quelconque des revendications précédentes, dans lequel la feuille de tamisage (20) couvrant le couvercle supérieur (12) est cousue au couvercle supérieur (12) autour d'une ligne de couture (22).

5. Sac de compostage selon l'une quelconque des revendications précédentes, dans lequel la feuille de tamisage (20) a un diamètre plus grand que le couvercle supérieur (2) et dans lequel la portion en porte-à-faux de la feuille de tamisage (20) sert de saillie de sommet (7).

6. Sac de compostage selon l'une quelconque des revendications précédentes, comprenant une fermeture à glissière pour ouvrir et fermer le couvercle supérieur (12) par rapport au corps (11) tubulaire.
